# EUROPÄISCHE PATENTANMELDUNG

(11) **EP 2 942 181 A1**
(43) Veröffentlichungstag der Anmeldung: **11.11.2015**
(21) Anmeldenummer: 15166649.2
(22) Anmeldetag: 06.05.2015
(51) Int. Cl.: B29C 51/16

(54) **VERFAHREN ZUM VERHAUTEN VON SCHAUMTEILEN MIT EINER KUNSTSTOFFFOLIE UND DER HERGESTELLTE SCHAUMTEIL**

(30) Priorität: 06.05.2014 DE 102014106265
(71) Anmelder: AHa! Thermoforming GmbH, 78573 Wurmlingen (DE)
(72) Erfinder: Anninger, Ralf, 72531 Geislingen (DE)
(74) Vertreter: Westphal, Mussgnug & Partner Patentanwälte mbB

(57) **Zusammenfassung**

Verfahren zum Verhauten von Schaumteilen (1) mit einer Kunststofffolie (2), gekennzeichnet durch folgenden Schritte:
-Bereitstellen eines Schaumteils (1),
-Bereitstellen einer thermoplastischen Folie (2),
-Einlegen des Schaumteils (1) und der Folie (2) in eine Tiefziehmaschine,
-Positionieren des Schaumteils (1) auf einer mit Entlüftung versehenen Stützform,
-Aufheizen der Folie (2) auf Verformungstemperatur,
-Ziehen der Folie (2) über das Schaumteil (1),
-Saugen der Folie (2) auf das Schaumteil (1) mittels Unterdruck und Verbinden der Folie (2) mit dem Schaumteil (1),
-Abkühlen des verhauteten Schaumteils (1) und Entnehmen desselben aus der Tiefziehmaschine,
-Entfernen etwaigen überschüssigen Folienresten vom Schaumteil (1).

## Beschreibung

Die Erfindung betrifft ein Verfahren zum Verhauten von Schaumteilen mit einer Kunststofffolie gemäß dem Oberbegriff des Patentanspruchs 1 sowie ein Schaumteil mit einer Kunststofffolie gemäß dem Oberbegriff des Patentanspruchs 15.

Verschiedene Verfahren zum Beschichten eines Schaumteils mit einer Folie sind aus der Literatur bekannt. Üblicherweise kann eine Folie aus Kunststoff mit dem Schaumteil hinterschäumt werden, wie es aus DE 203 11 166 U1 bekannt ist. DE 100 33 877 A1 offenbart ein weiteres Verfahren, wobei eine thermoplastische Folie als flüssige oder feinpartikuläre Phase auf der Oberfläche eines Schaumteils aufgebracht und thermisch verbunden wird. DE 196 40 130 A1 offenbart ein Verfahren zum Herstellen von geschäumten Formkörpern aus schaumbarem, expandierbarem Kunststoffmaterial. Eine Form ist mit einer Kunststofffolie belegt und mit Löchern versehen, so dass, wenn das Treibgas in die Form eingeblast wird, der Formkörper expandiert und sich mit der Folie verbindet. DE 10 2006 040 312 A1 offenbart einen Füllkörper aus volumenkomprimiertem Schaumstoff mit einer geklebten Folie. Es sind auch Verfahren bekannt, die die Folie durch Unterdruck oder Vakuum mit dem Schaumteil verbinden. DE 3706443 A1 offenbart zum Beispiel ein Verfahren zum Beschichten von luftundurchlässigen Schaumteilen mit einer thermoplastischen Folie, wobei die verformte Folie mittels Unterdruck mit der Folie verbunden wird. DE 4314030 A1 offenbart schließlich ein Verfahren zum Beschichten von plattenförmigen Körpern mit einer Kunststofffolie, wobei der Körper mit einem Kleber behandelt ist. Die Luft zwischen der verformten Folie und dem Körper wird dann solange herausgesaugt, bis eine Verbindung entsteht. Ein weiteres Unterdruckverfahren zum Beschichten eines Schaumteils mit unregelmäßigen Flächen wird in DE 19805989 offenbart.

Die Aufgabe der Erfindung besteht darin, ein einfaches Verfahren zum Verhauten von Schaumteilen mit einer Kunststofffolie vorzuschlagen, welches ein präzises Verhauten mit verbesserter Haftung und geringer Schwindung anbieten kann.

Die Aufgabe der Erfindung wird gelöst durch ein Verfahren zum Verhauten von Schaumteilen mit einer Kunststofffolie mit den Merkmalen des Patentanspruchs 1 sowie ein Schaumteil mit einer Kunststofffolie gemäß dem Oberbegriff des Patentanspruchs 15.

Vorteilhafte Ausgestaltungen und Weiterbildungen der Erfindung sind in den Unteransprüchen angegeben.

Das erfindungsgemäße Verfahren zum Verhauten von Schaumteilen mit einer Kunststofffolie umfasst die folgende Schritte in der nachfolgend angegebenen Reihenfolge: ein Schaumteil wird bereitgestellt. Dann wird eine thermoplastische Folie bereitgestellt. Das Schaumteil und die Folie werden in eine Tiefziehmaschine eingelegt. Das Schaumteil wird auf einer mit Entlüftung versehenen Stützform positioniert. Die Folie wird auf Verformungstemperatur aufgeheizt und über das Schaumteil gezogen. Die Folie wird danach auf das Schaumteil mittels Unterdruck gesaugt und mit dem Schaumteil verbunden. Das verhautete Schaumteil wird abgekühlt und aus der Tiefziehmaschine entnommen. Die etwaigen überschüssigen Folienresten werden schließlich vom Schaumteil entfernt.

Die Stützform dient zur Stabilisierung des Schaumteils, damit die Formstabilität auch bei Anliegen eines Unterdruckes gewährleistet werden kann. Durch die Entlüftung der Stützform kann die Folie in einfacher Weise auf das Schaumteil gesaugt werden. Vorzugsweise weist die Stützform Löcher und/oder Kanäle zur Entlüftung auf. Mit diesem Verfahren können Schaumteilen ganz einfach beschichtet werden. Mit diesem Verfahren können sowohl eine Außenseite als eine Innenseite des Schaumteils beschichtet werden.

Vorzugsweise wird für die Folie wenigstens ein schwindungsarmer Thermoplast ausgewählt aus Thermoplastische Elastomere auf Olefinbasis (TPO), Polystyrol (PS), Acrylnitril-Butadien-Styrol-Copolymerisat (ABS), amorphem Polyethylenterephthalat (A-PET) oder Polyethylenterephthalat mit Glycol (G-PET) verwendet. Damit können die Schwindungskräfte gering bleiben, so dass eine bessere Verbindung zwischen der Folie und dem Schaumteil erreicht werden kann.

Die Folie kann auch aus reinem TPO gefertigt werden. Damit kann die Folie mit der Temperatur selbsthaftend sein, so dass die Haftung zwischen Schaumteil und Folie besser wird.

In einer bevorzugten Ausführungsform wird die Folie in einem Co-Extrusionsverfahren gefertigt. Vorzugsweise werden als Materialien TPO und ABS verwendet, wobei sich das ABS Material nach dem Beschichten an einer externen Oberfläche des Schaumteils befindet. ABS ist ein lebensmittelechtes Material, so dass ein solches Schaumteil für die Lebensmittelindustrie besonders geeignet ist.

Die Folie kann vorteilhafterweise transparent und/oder durchgefärbt und/oder bedruckt sein. Je nach Anforderung an das verhautete Schaumteil besteht damit die Möglichkeit einer individuellen Farbgestaltung oder bspw. Bedruckung mit Werbung. Gemäß einer bevorzugten Ausgestaltung kann die Folie eine Schichtdicke zwischen 0,4 und 1,2 mm aufweisen, je nach Höhe der Bauteile. Damit können die Schwindungskräfte gering gehalten werden. Eine stabile Verhautung kann dann erreicht werden, die unempfindlich gegen äußere mechanische Einflüsse ist. Bevorzugt weist das Schaumteil eine Dichte höher als 32g/l, vorzugsweise zwischen 32g/l und 120g/l auf. Mit solchen Dichten ist ein einfaches Absaugen durch das Schaumteil nicht möglich.

Vor dem Einlegen in der Tiefmaschine kann in das Schaumteil eine Vielzahl von Löchern eingebracht werden. Durch die Löcher des Schaumteils kann die Folie in einfacher Weise auf das Schaumteil gesaugt werden.

Vorzugsweise können die Löcher des Schaumteils einen Durchmesser zwischen 0,8 und 1 mm aufweisen. Dadurch wird ein Unterdruck gut anlegbar. Die Anzahl und der Durchmesser der Löcher des Schaumteils hängen von der Geometrie des Schaumteils, bzw. der Rauheit der zu beschichtenden Oberfläche ab.

Vor dem Einlegen in der Tiefmaschine kann eine Oberfläche des Schaumteils aufgeraut werden. Die Rauheit kann dem Schaumkörper schon beim Schäumen durch die Form gegeben werden. Damit kann beim Beschichten dieser Oberfläche die Luft besser abgesaugt werden, so dass die Anzahl der Löcher reduziert werden kann. Dies wirkt insbesondere gut, wenn die raue zu beschichtende Oberfläche flach ist. Dann kann das Schaumteil keine Löcher aufweisen. Beispielweise kann die Oberfläche homogen geätzt oder sandgestrahlt werden. Bevorzugt ist eine mittlere Rautiefe von mindestens 5/100 mm.

Es ist besonders günstig, wenn das Schaumteil formgenau auf der Stützform positioniert wird zur besseren Stabilisierung des Schaumteils, insbesondere eine formschlüssige Abstützung ist hierfür sinnvoll.

Vorzugsweise kann die Folie zwischen 180°C und 200°C aufgeheizt werden, um eine Verformung der thermoplastischen Folie zu erreichen. Auf diese Weise wird es bspw. möglich, die verhauteten Schaumteile in einer Geschirrspülmaschine zu reinigen.

Die Folie kann mittels Keramikstrahler aufgeheizt werden. Dies bildet eine einfache Heizungsmöglichkeit.

Die Stützform kann aus Aluminium hergestellt sein. Damit kann die Stützform günstig und leicht zu verarbeiten sein.

Die Stützform kann zusätzlich temperiert sein. Damit können die inneren Materialspannungen abgebaut werden.

Vor dem Einlegen des Schaumteils und der Folie in die Tiefmaschine kann ein Klebemittel auf die Folie und/oder auf das Schaumteil aufgetragen werden. Mit dem Kleber wird dann eine wirksame Haftung zwischen Folie und Schaumteil hergestellt. Vorzugsweise ist der Kleber wärmeaktiviert und/oder wasserunlöslich.

Vorzugsweise kann das Klebemittel aufgesprüht werden. Damit ist es möglich, große Flächen schnell und gleichmäßig mit Klebstoff zu versehen.

Gemäß einer bevorzugten Ausgestaltung können die etwaigen überschüssigen Folienresten vom Schaumteil mit Ultraschallunterstützung entfernt werden. Damit kann die Folie schnell und präzis beschnitten werden. Beispielweise kann die Reibung zwischen einem Ultraschall-Messer und der Folie gering gehalten werden, so dass sehr saubere Schnittoberflächen entstehen. Je nach Materialstärke können die Folienresten auch durch Fräsen entfernt werden.

Vorzugsweise kann das verhautete Schaumteil zwischen 50°C und 60°C abgekühlt werden. Auf diese Weise kann die Stabilität der Folie erreicht werden und gleichzeitig kürzere Prozesszeiten gewährleistet.

Das erfindungsgemäße Schaumteil mit einer Kunststofffolie ist nach einem der erfindungsgemäßen Verfahren hergestellt.

Es ist besonders interessant, wenn das Schaumteil ein Schaumbehälter für Lagerung und Transport ist, da die erfindungsgemäßen Schaumteile stabil, gut reinigbar und isolierend sind.

Vorzugsweise kann der Schaumbehälter eine Bodenfläche und eine Seitenwandung mit einem von der Bodenfläche wegorientierten umlaufenden Rand aufweisen und zumindest die Bodenfläche, die Seitenwandung und der Rand können zumindest teilweise mit der Folie beschichtet sein. Beispielweise können sämtliche Außenseiten mit der Folie beschichtet sein, um einen guten Schutz gegen äußere Einflüsse zu gewährleisten. Alternativ können sämtliche Innenseiten des Schaumbehälters oder den ganzen Schaumbehälter mit der Folie beschichtet sein.

Gemäß einer bevorzugten Ausgestaltung kann der Rand zur Hälfte oder zu einem Drittel mit der Folie beschichtet sein. Damit kann eine dauerhafte Haftung der Folie erreicht und eine Ablösung der Folie an der Kante vermieden werden.

Eine gesamte Oberfläche des Schaumteils kann auch beschichtet sein. Dies ist durch zwei nacheinander erfolgende Verhautungsverfahren möglich. Insbesondere kann im zweiten Verhautungsverfahren die Luft seitlich des Schaumteils abgesaugt werden, was durch eine Rauheit der Oberfläche ermöglicht wird.

Es ist besonders vorteilhaft, wenn die Folie eine erste und eine zweite Schicht aufweist, wobei die erste Schicht aus TPO und die zweite Schicht aus ABS ist und die Folie co-extrudiert ist. Die TPO Schicht weist in Richtung des Schaumteils und sorgt für eine Haftung zwischen Schaumteil und Folie, da TPO durch Wärmeeinwirkung selbsthaftende Eigenschaften aufweist. Die externe ABS Schicht ermöglicht eine Verwendung des beschichteten Schaumteils für die Lebensmittelindustrie.

Die Erfindung wird anhand der nachfolgenden Figuren ausführlich erläutert. Es zeigt
- Figur 1a: eine Ansicht von oben eines erfindungsgemäßen Schaumteil mit einer Kunststofffolie,
- Figur 1b: einen Längsschnitt entlang der Linie A-A in Figur 1a,
- Figur 1c: eine Detailansicht eines Randes der Figur 1b,
- Figur 2: ein Flussdiagramm der Verfahrensschritte zur Herstellung des Schaumteils aus den Figuren 1a-c.

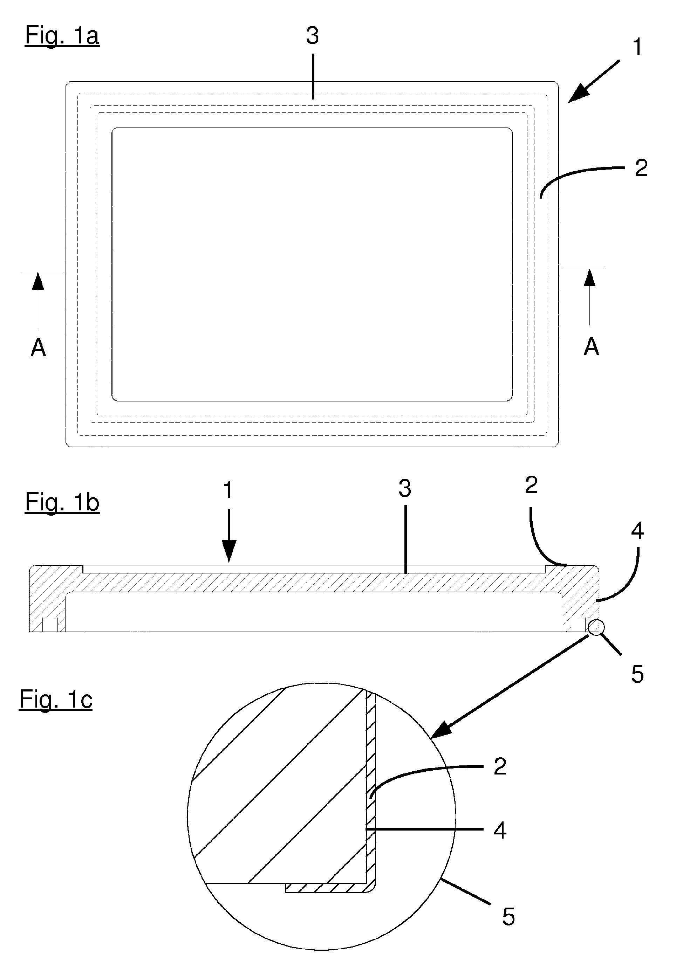

Figur 1a-c zeigen ein erfindungsgemäßes Schaumteil 1 mit einer Kunststofffolie 2, das eine Bodenfläche 3, eine Seitenwandung 4, einen umlaufenden Rand 5 sowie vorliegend nicht weiter dargestellte Löcher aufweist.

Das Schaumteil 1 verfügt über gute isolierende Eigenschaften und ist leicht reinigbar, so dass es vorteilhaft ist, wenn das Schaumteil 1 ein Schaumbehälter für Lagerung und Transport bspw. von Lebensmitteln ist. Der umlaufende Rand 5 ist von der Bodenfläche 3 wegorientiert. Im vorliegenden Ausführungsbeispiel sind die Bodenfläche 3 und die Seitenwandung 4 vollständig und der umlaufende Rand 6 zu einem Zehntel mit der Folie 2 beschichtet. Dies gewährleistet einen guten Schutz gegen äußere Einflüsse. In anderen nicht dargestellten Ausführungsformen können aber die Bodenfläche 3, die Seitenwandung 4 und der umlaufende Rand 6 nur teilweise und/oder weitere Flächen des Schaumteils 1 mit der Folie 2 beschichtet sein. Gemäß einer anderen Ausführungsform kann die gesamte Oberfläche des Schaumteils 1 beschichtet sein. Figur 1c zeigt eine Detailansicht eines Rands der Figur 1b. Figur 1c zeigt deutlich, dass der Rand 6 zu einem Zehntel mit der Folie 2 beschichtet ist. In anderen Ausführungsformen kann der Rand 6 zur Hälfte oder zu einem Drittel mit der Folie 2 beschichtet sein. Dies vermeidet eine Ablösung der Folie an der Kante und gewährleistet eine stabile Haftung der Folie. Während des Herstellungsprozesses ist das Schaumteil 1 auf einer Stützform positioniert. Indem die Stützform den umlaufenden Rand 6 nur teilweise abstützt, ist es möglich, den restlichen Rand 6 mit der Folie 2 zu beschichten und der Ablösungsgefahr der Folie 2 an der nicht abgestützten Kante zu vorbeugen. Die etwaigen überschüssigen Folienresten sind vorliegend mit Ultraschallunterstützung vom Schaumteil entfernt. Damit kann die Folie schnell und präzis beschnitten werden mit sauberen Schnittoberflächen.

Das Schaumteil 1 weist vorliegend eine Dichte von 32g/l auf. Das Schaumteil kann aber auch eine höhere Dichte aufweisen. Das Schaumteil 1 weist Löcher auf, die vorliegend einen Durchmesser von ca. 0,8mm aufweisen, so dass sie in den vorliegenden Zeichnungen nicht sichtbar sind. Dadurch wird ein Unterdruck gut anlegbar. Diese Löcher können in anderen Ausführungsformen einen Durchmesser bis zu 1 mm aufweisen. Es ist auch denkbar, dass das Schaumteil 1 keine Löcher aufweist. Außerdem weisen vorliegend die Bodenfläche 3, die Seitenwandung 4 und der umlaufende Rand 6 eine raue Oberfläche mit einer mittleren Rautiefe von 5/100 mm auf. In anderen Ausführungsformen können nur einige Oberflächen oder sämtliche Flächen des Schaumteils 1 rau sein und die Rauheit kann höher sein.

Die Kunststofffolie 2 ist vorliegend aus TPO und ABS in einem Co-Extrusionsverfahren hergestellt. ABS und TPO sind schwindungsarme Thermoplaste. TPO ermöglicht eine sehr gute Verbindung zwischen der Folie und dem Schaumteil. ABS ist ein lebensmittelechtes Material. Die Folie kann aber auch nur aus TPO oder aus anderen schwindungsarmen Thermoplasten wie Polystyrol, A-PET oder G-PET hergestellt sein.

Die Verformungstemperatur der Kunststofffolie 2 liegt vorliegend bei 180°C. Auf diese Weise ist es möglich, das verhautete Schaumteil 1 in einer Geschirrspülmaschine zu reinigen. Die Verformungstemperatur der Kunststofffolie 2 kann aber in weiteren Ausführungsformen bis zu 200°C erreichen. Die Folie ist in diesem Beispiel transparent, kann aber auch durchgefärbt und/oder bedruckt sein. Je nach Anforderung an das verhautete Schaumteil besteht damit die Möglichkeit einer individuellen Farbgestaltung oder bspw. Bedruckung mit Werbung. Die Schichtdicke der Kunststofffolie 2 ist vorliegend 0,4 mm, kann aber bis zu 1,2 mm sein je nach Höhe der Bauteile. Mit solchen dünnen Folien können die Schwindungskräfte gering gehalten werden, so dass eine stabile Verhautung erreicht wird, die unempfindlich gegen äußere mechanische Einflüsse ist.

Die Folie 2 ist auf dem Schaumteil 1 durch Unterdruck gesaugt und geklebt. Dies ermöglicht eine wirksame Haftung zwischen Folie und Schaumteil. Das Klebemittel ist vorliegend auf das Schaumteil 1 aufgesprüht, kann aber auch auf die Folie 2 aufgesprüht sein. Damit ist es möglich, große Flächen schnell und gleichmäßig mit Klebstoff zu versehen.

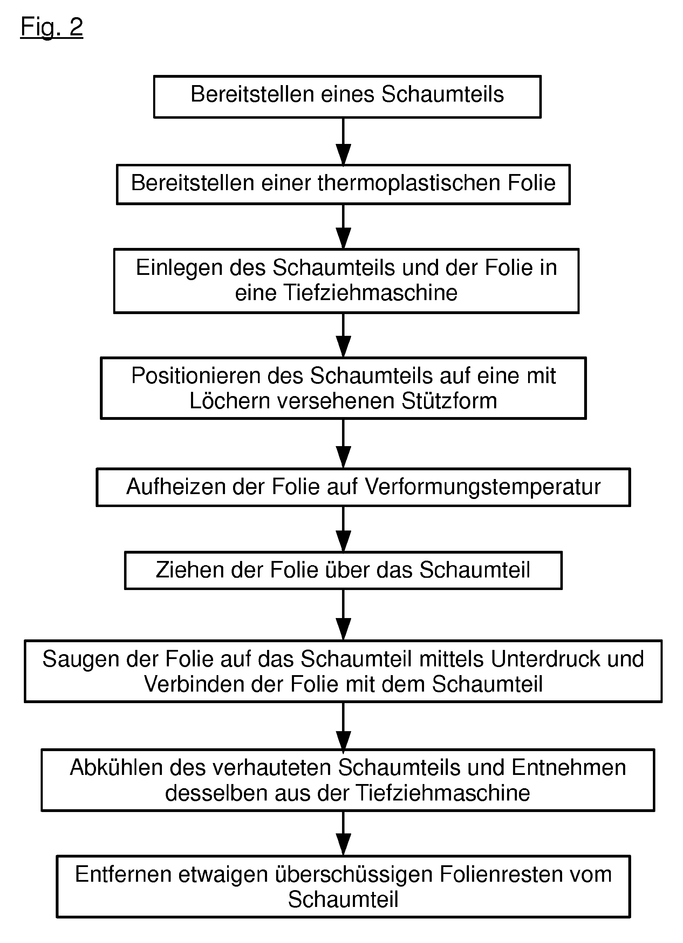

Figur 2 zeigt die verschiedenen Schritte des erfindungsgemäßen Verfahrens zum Verhauten von Schaumteilen 1 mit einer Kunststofffolie 2.

Ein Schaumteil 1 wird bereitgestellt. Dann wird eine thermoplastische Folie 2 bereitgestellt. Eine Vielzahl von Löchern kann in das Schaumteil 1 eingebracht werden. Alternativ kann das Schaumteil 1 bereits mit Löchern versehen sein. Die Löcher können einen Durchmesser zwischen 0,8 und 1 mm aufweisen. Die Löcher können bspw. an den Rändern des Schaumteils 1 eingebracht werden. Eine zu beschichtende Oberfläche des Schaumteils kann auch aufgeraut werden, bspw. durch Sandstrahlen oder Ätzen. Die raue Oberfläche kann eine mittlere Rautiefe von mindestens 5/100mm aufweisen. Alternativ kann die zu beschichtende Oberfläche des Schaumteils 1 bereits aufgeraut sein. Das Aufrauen kann schon beim Schäumen geschehen. Ein Klebemittel kann auf die Folie 2 und/oder auf das Schaumteil 1 aufgetragen werden. Das Klebemittel kann beispielweise aufgesprüht werden. Das Schaumteil 1 und die Folie 2 werden in eine Tiefziehmaschine eingelegt. Das Schaumteil 1 wird dann auf einer mit Entlüftung versehenen Stützform positioniert. Die Stützform dient zur Stabilisierung des Schaumteils, damit die Formstabilität gewährleistet werden kann. Sie kann aus Aluminium hergestellt sein. Damit kann die Stützform günstig und leicht zu verarbeiten sein. Die Stützform kann zusätzlich temperiert sein. Damit können die internen Materialspannungen abgebaut werden. Das Schaumteil 1 kann vorteilhafterweise formgenau auf der Stützform positioniert werden zur besseren Stabilisierung des Schaumteils, insbesondere eine formschlüssige Abstützung ist hierfür sinnvoll. Ein Unterdruck kann durch die Löcher des Schaumteils 1 und die Entlüftung der Stützform geschafft werden und gleichzeitig kann die Luft durch die Rauheit der zu beschichtende Oberfläche seitlich des Schaumteils 1 abgesaugt werden. Der Rest des Schaumteils 1 wird von der Stützform entlang des Beschnitts verdeckt. Vorzugsweise weist die Stützform Löcher und/oder Kanäle auf. Die Folie 2 kann auf Außerränder der Stützform, mit Abstand von dem Schaumteil 1, gestützt werden. Die Folie 2 wird auf Verformungstemperatur aufgeheizt und über das Schaumteil 1 gezogen. Vorzugsweise kann die Folie 2 zwischen 180°C und 200°C aufgeheizt werden. Die Folie 2 kann mittels Keramikstrahler aufgeheizt werden. Die Folie 2 wird danach auf das Schaumteil 1 mittels Unterdruck durch die Löcher des Schaumteils 1 und die Entlüftung der Stützform gesaugt und mit dem Schaumteil 1 verbunden. Das verhautete Schaumteil 1 wird bis zur Formstabilität abgekühlt und aus der Tiefziehmaschine entnommen. Das verhautete Schaumteil 1 kann zwischen 50°C und 60°C abgekühlt werden. Auf diese Weise kann die Stabilität der Folie erreicht werden und gleichzeitig kürzere Prozesszeiten gewährleistet. Die etwaigen überschüssigen Folienresten werden schließlich vom Schaumteil 1 entfernt, vorteilhafterweise mit Ultraschallunterstützung. Die Folienresten können auch durch Fräsen entfernt werden. Damit kann die Folie 2 schnell und präzis beschnitten werden und saubere Schnittoberflächen werden erreicht. Das fertige Schaumteil 1 wird schließlich kontrolliert und gemessen. Mit diesem Verfahren kann entweder eine äußere oder eine innere Oberfläche des Schaumteils beschichtet werden. Das Verfahren kann auch wiederholt werden, um die restliche Oberfläche des Schaumteils 1 zu beschichten. Dann kann die Luft seitlich des Schaumteils 1 abgesaugt werden.

### Bezugszeichenliste

- 1: Schaumteil
- 2: Kunststofffolie
- 3: Bodenfläche
- 4: Seitenwandung
- 5: Rand

## Patentansprüche

1. Verfahren zum Verhauten von Schaumteilen (1) mit einer Kunststofffolie (2), **gekennzeichnet durch** folgenden Schritte:
- Bereitstellen eines Schaumteils (1),
- Bereitstellen einer thermoplastischen Folie (2),
- Einlegen des Schaumteils (1) und der Folie (2) in eine Tiefziehmaschine,
- Positionieren des Schaumteils (1) auf einer mit Entlüftung versehenen Stützform,
- Aufheizen der Folie (2) auf Verformungstemperatur,
- Ziehen der Folie (2) über das Schaumteil (1),
- Saugen der Folie (2) auf das Schaumteil (1) mittels Unterdruck und Verbinden der Folie (2) mit dem Schaumteil (1),
- Abkühlen des verhauteten Schaumteils (1) und Entnehmen desselben aus der Tiefziehmaschine,
- Entfernen etwaigen überschüssigen Folienresten vom Schaumteil (1).

2. Verfahren nach Anspruch 1,
**dadurch gekennzeichne**t, dass für die Folie (2) wenigstens ein schwindungsarmer Thermoplast ausgewählt aus TPO, PS, ABS, A-PET und G-PET verwendet wird.

3. Verfahren nach Anspruch 1 oder 2,
**dadurch gekennzeichne**t, dass die Folie (2) in einem Co-Extrusionsverfahren gefertigt wird, wobei die Folie (2) eine erste und eine zweite Schicht aus unterschiedlichen Materialien aufweist, insbesondere die erste Schicht aus TPO und die zweite Schicht aus ABS ist.

4. Verfahren nach einem der vorhergehenden Ansprüche,
**dadurch gekennzeichne**t, dass die Folie (2) transparent und/oder durchgefärbt und/oder bedruckt ist.

5. Verfahren nach einem der vorhergehenden Ansprüche,
**dadurch gekennzeichne**t, dass vor dem Einlegen in die Tiefziehmaschine, eine Vielzahl von Löchern in das Schaumteil (1) eingebracht wird.

6. Verfahren nach einem der vorhergehenden Ansprüche,
**dadurch gekennzeichne**t, dass vor dem Einlegen in die Tiefziehmaschine, eine Oberfläche des Schaumteils (1) durch Sandstrahlen oder Ätzen aufgeraut wird.

7. Verfahren nach einem der vorhergehenden Ansprüche,
**dadurch gekennzeichne**t, dass das Schaumteil (1) formgenau auf der Stützform positioniert wird.

8. Verfahren nach einem der vorhergehenden Ansprüche,
**dadurch gekennzeichne**t, dass die Folie (2) mittels Keramikstrahler aufgeheizt wird.

9. Verfahren nach einem der vorhergehenden Ansprüche,
**dadurch gekennzeichne**t, dass die Stützform aus Aluminium hergestellt ist.

10. Verfahren nach einem der vorhergehenden Ansprüche,
**dadurch gekennzeichne**t, dass als Stützform eine temperierte Form verwendet wird.

11. Verfahren nach einem der vorhergehenden Ansprüche,
**dadurch gekennzeichne**t, dass vor dem Einlegen des Schaumteils (1) und der Folie (2) in die Tiefziehmaschine, ein Klebemittel auf die Folie (2) und/oder auf das Schaumteil (1) aufgetragen wird.

12. Verfahren nach Anspruch 11,
**dadurch gekennzeichne**t, dass das Klebemittel aufgesprüht wird.

13. Verfahren nach einem der vorhergehenden Ansprüche,
**dadurch gekennzeichne**t, dass die etwaigen überschüssigen Folienresten vom Schaumteil mit Ultraschallunterstützung oder durch Fräsen entfernt werden.

14. Schaumteil (1) mit einer Kunststofffolie (2), hergestellt nach einem Verfahren der Ansprüche 1 bis 13.

15. Schaumteil (1) mit einer Kunststofffolie (2) nach Anspruch 14,
**dadurch gekennzeichne**t, dass das Schaumteil (1) ein Schaumbehälter für Lagerung und Transport ist.

16. Schaumteil (1) mit einer Kunststofffolie (2) nach einem der Ansprüche 14 oder 15,
**dadurch gekennzeichne**t, dass der Schaumbehälter eine Bodenfläche (3) und eine Seitenwandung (4) mit einem von der Bodenfläche (3) wegorientierten umlaufenden Rand (5) aufweist, und dass zumindest die Bodenfläche (3), die Seitenwandung (4) und der Rand (5) zumindest teilweise mit der Folie (2) beschichtet sind.

17. Schaumteil (1) mit einer Kunststofffolie (2) nach Anspruch 16,
**dadurch gekennzeichne**t, dass der Rand (5) zur Hälfte oder zu einem Drittel mit der Folie (2) beschichtet ist.

18. Schaumteil (1) mit einer Kunststofffolie (2) nach einem der Ansprüche 14 bis 17,
**dadurch gekennzeichne**t, dass eine gesamte Oberfläche des Schaumteils (1) beschichtet ist.
